# FASCICULE DE BREVET EUROPEEN

(11) **EP 4 441 825 B1**
(45) Date de publication et mention de la délivrance du brevet: **26.11.2025**
(21) Numéro de dépôt: 22813651.1
(22) Date de dépôt: 21.10.2022
(51) Int. Cl.: H01M 10/0562, H01M 10/613, H01M 10/615, H01M 10/625, H01M 10/6553, H01M 10/6563, H01M 10/658, H01M 10/659, H01M 10/663, H01M 10/6568, B60H 1/00

(54) **SYSTEME THERMIQUE POUR BATTERIE SOLIDE A ELECTROLYTE POLYMERE, PROCEDE ET VEHICULE SUR LA BASE D'UN TEL SYSTEME**
THERMISCHES SYSTEM FÜR EINE FESTPOLYMERELEKTROLYTBATTERIE, VERFAHREN UND FAHRZEUG AUF BASIS SOLCH EINES SYSTEMS
THERMAL SYSTEM FOR A SOLID POLYMER ELECTROLYTE BATTERY, METHOD AND VEHICLE BASED ON SUCH A SYSTEM

(30) Priorité: 03.12.2021 FR 2112896
(43) Date de publication de la demande: 09.10.2024
(73) Titulaire: Stellantis Auto SAS, 78300 Poissy (FR)
(72) Inventeur: LI, Hai, 95000 CERGY (FR)
(74) Mandataire: PSIP
(86) Numéro de dépôt international: PCT/FR2022/051996
(87) Numéro de publication internationale: WO 2023/099826

(56) Documents cités:
- CN-U- 209 266 501
- JP-A- 2020 009 591
- US-A1- 2015 128 626
- US-A1- 2017 158 081
- US-A1- 2018 319 246
- US-A1- 2021 031 588

## Description

La présente invention revendique la priorité de la demande française N°2112896 déposée le 03.12.2021.

L'invention se rapporte au domaine des batteries de traction de véhicules automobile, plus particulièrement des batteries solides à électrolyte polymère. L'invention porte plus précisément sur un système thermique pour une telle batterie ainsi qu'un procédé et un véhicule sur la base d'un tel système. L'état de l'art antérieur est représenté par US 2017/158081 A1, US 2021/031588 A1, US 2015/128626 A1, US 2018/319246 A1, CN 209 266 501 U et JP 2020 009591 A.

La batterie solide à électrolyte polymère requiert une haute température, d'environ 70°C, pour avoir un fonctionnement optimal. En outre, ces batteries impliquent des demandes de refroidissement déclenchées à une température très haute, d'environ 80°C.

Les architectures thermiques actuelles sont pleinement adaptées aux batteries ayant un électrolyte liquide. Les batteries à électrolyte liquide fonctionnent de manière optimale entre 20°C et 40°C.

Ainsi, les architectures thermiques actuelles n'offrent pas une gestion thermique appropriée aux batteries solides à électrolyte polymère. Ceci est dû au fait que les plages optimales de température de ces deux types de batteries se distinguent fortement.

Un autre défi se présente au niveau de barres omnibus (ou « *busbar* » en langue anglaise) dans un montage spécifique de pack-batterie, car la température de l'air entourant les barres omnibus dans le cas d'une batterie solide est plus haute que dans l'architecture usuelle. Cela peut nuire au bon fonctionnement du pack-batterie.

Par ailleurs, la haute température de la batterie solide génère des déperditions de chaleur dans l'environnement immédiat de la batterie, ce qui pourrait endommager des composants du véhicule automobile.

Un premier objectif de l'invention est de proposer une architecture thermique mieux adaptée aux batteries solides à électrolyte polymère.

Un deuxième objectif est de permettre un fonctionnement optimal des barres omnibus du pack-batterie en dépit de la haute température de la batterie solide.

Un troisième objectif est de protéger les composants dans l'environnement immédiat de la batterie des fortes déperditions de chaleur.

Pour atteindre ces objectifs, l'invention propose un système thermique pour batterie solide à électrolyte polymère, le système thermique comprenant
- un échangeur configuré pour refroidir ou réchauffer une batterie,
- un circuit thermique à fluide calorifique, le circuit thermique connectant un chauffage électrique à l'échangeur, le fluide calorifique étant thermiquement couplé à un condenseur,
- un circuit de pompe à chaleur à réfrigérant, le circuit de pompe à chaleur connectant le condenseur à un évaporateur, et comprenant un compresseur et une valve d'expansion.
Ce circuit thermique comprend une dérivation ayant une configuration court-circuitant le condenseur pour connecter l'échangeur à un radiateur équipé d'un premier ventilateur ; et une configuration court-circuitant ledit radiateur pour thermiquement coupler l'échangeur au condenseur.

Avantageusement, le montage avec ce circuit thermique, un circuit de pompe à chaleur et le court-circuit, est mieux adapté aux hautes températures exigées par la batterie solide à électrode polymère, car les changements de configuration permettent de mettre en œuvre une configuration de refroidissement et une configuration de réchauffement.

En particulier, le système thermique est configuré pour fonctionner en deux modes, un mode refroidissement dans lequel le circuit de pompe à chaleur est désactivé, et le condenseur est court-circuité au profit du radiateur, et un mode réchauffement dans lequel le circuit de pompe à chaleur est activé, et le radiateur est court-circuité au profit du condenseur. Cela permet de commander la désactivation de ces circuits pour plus d'efficacité du système thermique.

L'invention porte en outre sur un système de batterie pour batterie solide à électrode polymère, la batterie solide étant sous forme de pack-batterie qui comprend des modules de batterie et des barres omnibus connectant les modules de batterie, le système de batterie comprenant
- un système thermique selon l'invention,
- une enveloppe formant boîtier du pack-batterie et de l'échangeur, l'échangeur étant en regard des modules de batterie, l'enveloppe formant boîtier comprenant au moins un matériau isolant.

Avantageusement, cela permet de mettre en œuvre une importante isolation requise par la batterie solide à électrode polymère, de sorte à maintenir sa température à un niveau beaucoup plus haut que la température ambiante. En outre, le matériau isolant permet de limiter les déperditions de chaleur de la batterie polymère vers les composants de son environnement immédiat.

Selon une variante, ledit matériau isolant comprend un matériau polymère à changement de phase. Avantageusement, ce matériau sert de réservoir d'énergie calorifique pour augmenter d'avantage l'efficacité de l'isolation.

Selon une variante, ledit matériau polymère à changement de phase est disposé sur une section supérieure et une section inférieure du boîtier, en particulier sensiblement contre l'échangeur. Cela permet d'être adapté aux pack-batteries qui sont généralement larges dans le sens horizontal et minces dans le sens vertical.

Selon une variante, le système de batterie comprend en outre au moins un deuxième ventilateur créant un flux de refroidissement des barres omnibus. Cela permet de réaliser un refroidissement par la convection forcée pour un meilleur fonctionnement du pack-batterie.

Selon une variante, le système de batterie comprend un agencement de modules de batterie alignés disposés entre l'échangeur d'un côté, et les barres omnibus de l'autre côté dans une direction d'empilage, au moins un deuxième ventilateur étant disposé dans la direction d'empilage en regard des barres omnibus du côté opposé à l'échangeur.

Selon une variante, le système de batterie comprend un ou ledit agencement de modules de batterie alignés disposés entre l'échangeur d'un côté, et les barres omnibus de l'autre côté dans une ou ladite direction d'empilage, au moins un deuxième ou troisième ventilateur étant disposé dans une direction perpendiculaire à la direction d'empilage en regard des barres omnibus.

L'invention concerne également un véhicule automobile comprenant un système thermique pour batterie selon l'invention. En particulier, le radiateur et l'évaporateur sont disposés en arrière d'un radiateur principal du moteur du véhicule. Cela permet de préserver le moteur électrique car la température du fluide du radiateur est trop importante et chaufferait le flux d'air arrivant au moteur électrique dans le cas contraire.

Un autre objet de l'invention a trait à un procédé de gestion thermique de batterie solide à électrolyte polymère, au moyen d'un système thermique comprenant :
- un échangeur configuré pour refroidir ou réchauffer une batterie,
- un circuit thermique de batterie à fluide calorifique, le circuit thermique connectant un chauffage électrique à l'échangeur, le fluide calorifique étant thermiquement couplé à un condenseur,
- un circuit de pompe à chaleur à réfrigérant, le circuit de pompe à chaleur connectant le condenseur à un évaporateur, et comprenant un compresseur et une valve d'expansion,
- une dérivation ayant une configuration court-circuitant le condenseur pour connecter l'échangeur à un radiateur équipé d'un premier ventilateur ; et une configuration court-circuitant ledit radiateur pour thermiquement coupler l'échangeur au condenseur,
le procédé comprenant au moins une des étapes suivantes :
- mettre en œuvre un mode refroidissement dans lequel le circuit de pompe à chaleur est désactivé, et le condenseur est court-circuité au profit du radiateur ; et/ou
- mettre en œuvre un mode réchauffement dans lequel le circuit de pompe à chaleur est activé, et le radiateur est court-circuité au profit du condenseur.

L'invention sera davantage détaillée par la description de modes de réalisation non limitatifs, et sur la base des figures annexées illustrant des variantes de l'invention, parmi lesquelles :
[Fig.1] illustre schématiquement un système thermique de batterie solide à électrolyte polymère selon une variante préférée de l'invention, dans lequel le condenseur est court-circuité au profit du radiateur ;
[Fig.2] illustre schématiquement le système thermique de la figure 1, mais dans lequel le radiateur est court-circuité au profit du condenseur ;
[Fig.3] illustre schématiquement une coupe transversale d'un système de batterie selon une variante préférée de l'invention, avec un boîtier comprenant un matériau isolant.

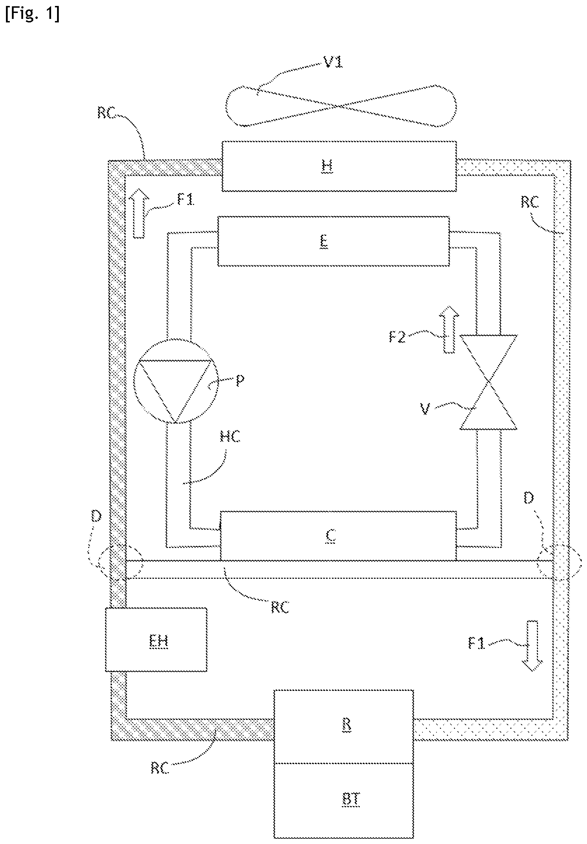

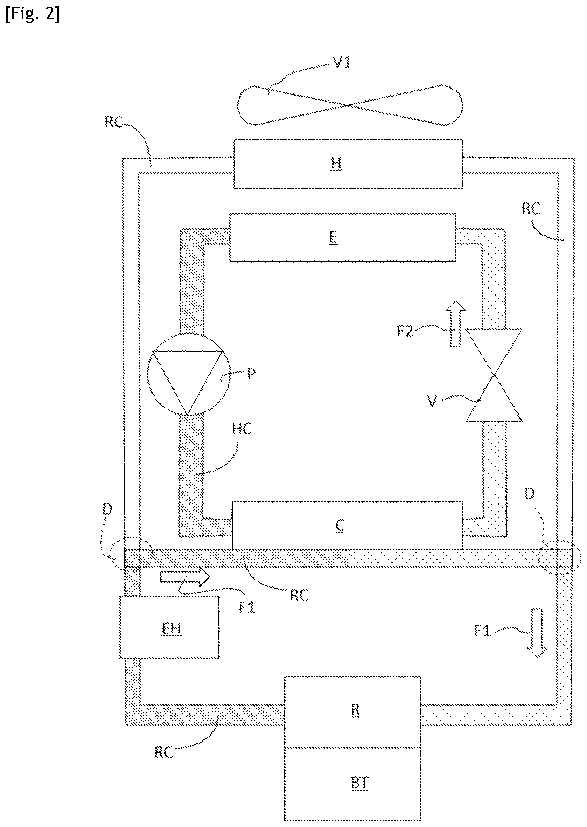

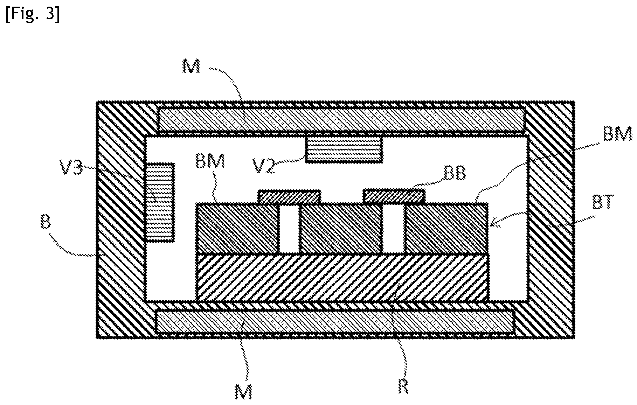

L'architecture proposée dans l'invention pour la gestion thermique d'une la batterie solide BT à électrolyte polymère est présentée en figures 1 et 2. Il s'agit d'un système thermique pour une telle batterie BT. En particulier, la batterie solide BT est sous forme de pack-batterie qui comprend des modules de batterie BM et des barres omnibus BB connectant les modules de batterie BM. La configuration de la batterie et de son boîtier est détaillée en figure 3.

Dans une architecture typique pour une batterie à électrolyte liquide selon l'art antérieur, deux modes de refroidissement sont prévus, à savoir soit par un climatiseur pour un refroidissement plus fort ou par un radiateur pour un refroidissement plus faible.

Pour le refroidissement de la batterie solide BT, le mode par le radiateur est retenu et un radiateur H est utilisé dans l'invention, tandis que le mode par le climatiseur peut être supprimé. Le radiateur H est équipé d'un premier ventilateur V1. Ainsi, on définit un circuit thermique RC de batterie connectant le radiateur H à un échangeur R de la batterie BT. Le circuit thermique RC comprend un fluide calorifique F1.

La température optimale de la batterie solide BT est au-dessus de 70°C, et l'écart température entre la batterie BT et l'air ambiant est tellement grand qu'il suffit d'enclencher uniquement le radiateur H pour dissiper la chaleur générée par la batterie BT.

Une autre différence est que le radiateur H est en particulier un deuxième radiateur qui se situe en arrière d'un radiateur principal d'un véhicule automobile, servant à refroidir un moteur électrique dudit véhicule. Cette configuration est préférée car la température du fluide F1 dans le circuit du radiateur H peut atteindre 90°C, une température trop chaude pour le moteur électrique. Ce deuxième radiateur H est plus petit que le radiateur principal parce que la différence température entre le fluide calorifique F1 et la température ambiante est plus grande. En particulier, le radiateur H est disposé en arrière, parce que ledit radiateur H est plus chaud, et le flux d'air entrainé par un ventilateur correspondant ou par le roulement du véhicule doit servir d'abord à refroidir le moteur électrique.

Pour le chauffage, l'architecture typique de la batterie à électrolyte liquide de l'art antérieur permet deux modes d'opération : par un chauffage électrique EH quand la température est trop basse, ou par une pompe à chaleur. Ces deux modes sont retenus pour la batterie solide BT, mais leurs opérations sont différentes. Dans l'invention, la pompe à chaleur est formée par un évaporateur E et un condenseur C pouvant être thermiquement couplé à l'échangeur R via le fluide calorifique F1. La pompe à chaleur comprend un réfrigérant F2, et forme un circuit dit de pompe à chaleur HC. Le circuit de pompe à chaleur HC comprend un compresseur P et une valve d'expansion V.

La batterie à électrolyte liquide de l'art antérieur requiert un réchauffement quand la température est inférieure à 20°C. A cette température, l'habitacle ne demande pas un refroidissement pour un automobiliste.

Par contre, la batterie solide BT de l'invention requiert un réchauffement lorsque la température est inférieure à 70°C. En outre, une activation de la pompe à chaleur est requise pour une plage de température beaucoup plus grande que dans l'art antérieur. La pompe à chaleur n'a pas aucun problème de fonctionner dans cette plage de température, mais dans la variante préférée, elle permet un chauffage de la batterie BT uniquement quand l'habitacle ne requiert pas de refroidissement, parce qu'il y a uniquement un climatiseur dans le véhicule. Quand l'habitacle requiert un refroidissement, le climatiseur le priorise, et arrête de fonctionner comme la pompe à chaleur. Dans ce cas, le seul moyen de réchauffement de la batterie est le chauffage électrique EH.

Il faut noter que l'évaporateur E de la pompe à chaleur se situe aussi de préférence derrière le radiateur principal, parce que le flux d'air réchauffé par le radiateur principal aide à avoir un meilleur fonctionnement de la pompe à chaleur.

Selon l'invention, le circuit thermique RC comprend une dérivation D ayant une configuration où elle court-circuite le condenseur C, pour connecter l'échangeur R au radiateur H ; et une configuration où elle court-circuite le radiateur H pour coupler thermiquement l'échangeur R au condenseur C. Ces configurations sont illustrées respectivement par les figures 1 et 2.

Les éléments d'une telle dérivation D sont connus en eux-mêmes et ne seront pas davantage détaillés.

Ainsi, le système thermique est configuré pour fonctionner en deux modes, un mode refroidissement dans lequel le circuit de pompe à chaleur HC est désactivé, et le condenseur C est court-circuité au profit du radiateur H, et un mode réchauffement dans lequel le circuit de pompe à chaleur HC est activé, et le radiateur H est court-circuité au profit du condenseur C.

En raison de la haute température d'opération de la batterie solide BT, l'invention propose d'utiliser un matériau isolant M dans un boîtier B, pouvant être un boîtier métallique usuel du pack-batterie BT. Le boîtier B englobe le pack-batterie et l'échangeur R. L'objectif est de conserver l'énergie dans le pack-batterie au mieux et empêcher la dissipation de chaleur dans l'environnement le plus efficacement. Différents matériaux M peuvent être utilisés, par exemple un polypropylène (PP) adapté aux basses températures qui offre une bonne isolation et aussi une bonne tenue mécanique pour toute la plage de température du véhicule, à savoir de -40° à 100°C. Ce type de matériau est connu en lui-même, et ne sera pas davantage discuté.

L'effet d'isolation peut être amélioré en utilisant un ou ledit matériau M à chargement de phase embarqué dans le boîtier B, en particulier aux sections supérieures et inférieures du boîtier B. Ces deux surfaces supérieure et inférieure sont choisies pour la mise en place dudit matériau M parce que le pack-batterie BT est typiquement large dans le sens horizontal et mince dans le sens vertical.

De préférence, la température de changement de phase est la température la plus haute permise à l'intérieure du pack-batterie, par exemple environ 80°C. Ce matériau M sert comme un réservoir d'énergie calorifique : quand la batterie BT est en surchauffe, il absorbe l'énergie et change d'état du solide au liquide ; quand la batterie BT est froide, par exemple pendant un stationnement long, il libère l'énergie par son changement d'état du liquide au solide pour maintenir la température de la batterie BT.

Des deuxième et troisième ventilateurs V2, V3 sont installés à l'intérieur du boîtier B du pack-batterie BT. En effet, la température de l'air dans le pack-batterie BT est plus haute que le cas de la batterie avec l'électrolyte liquide de l'art antérieur (70°C dans le premier cas contre 50°C dans le second). En conséquence, l'écart de température entre l'air et les barres omnibus BB (ou « *busbars* » en langue anglaise) est beaucoup moindre. La température maximale des barres omnibus BB est classiquement d'environ 100°C. Grâce aux ventilateurs V2, V3, les barres omnibus BB peuvent être refroidies par la convection d'air forcée au lieu d'une convection naturelle. L'efficacité de transfert de chaleur significativement renforcée par le flux d'air actif.

Ainsi, l'invention propose un système de batterie sur la base des éléments détaillés ci-dessus.

Le système de batterie comprend un agencement de modules de batterie BM alignés disposés entre l'échangeur R d'un côté, et les barres omnibus BB de l'autre côté dans une direction d'empilage verticale. Dans la variante illustrée, le deuxième ventilateur V2 est disposé dans la direction d'empilage en regard des barres omnibus BB du côté opposé à l'échangeur R. En outre, le troisième ventilateur V3 est disposé dans une direction perpendiculaire à la direction d'empilage, c'est-à-dire orienté horizontalement, en regard des barres omnibus BB.

L'invention concerne en outre un véhicule automobile comprenant un système thermique pour batterie tel que décrit précédemment et/ou un système de batterie tel que décrit précédemment.

L'invention porte également sur un procédé de gestion thermique de batterie solide à électrolyte polymère, au moyen d'un système thermique du type décrit précédemment.

Le procédé de gestion thermique selon l'invention comprend une étape de mise en œuvre d'un mode refroidissement dans lequel le circuit de pompe à chaleur HC est désactivé, et le condenseur C est court-circuité au profit du radiateur H.

Le procédé de gestion thermique selon l'invention comprend en outre une étape de mise en œuvre d'un mode réchauffement dans lequel le circuit de pompe à chaleur HC est activé, et le radiateur H est court-circuité au profit du condenseur C.

Un autre objet de l'invention a trait à un procédé d'assemblage de batterie solide BT à électrolyte polymère. En particulier, la batterie solide BT est telle que décrite précédemment.

Le procédé d'assemblage selon l'invention comprend une étape dans laquelle on dispose un système thermique comprenant un échangeur R de batterie de sorte que l'échangeur R soit en regard de modules de batterie MB pour les refroidir.

Le procédé d'assemblage selon l'invention comprend en outre une étape dans laquelle on dispose le pack-batterie et l'échangeur R dans une enveloppe formant boîtier de batterie B.

Selon un aspect de l'invention, l'enveloppe formant boîtier B comprend au moins un matériau isolant M, en particulier au moins un matériau polymère à changement de phase.

## Revendications

1. Système thermique pour batterie solide à électrolyte polymère, le système thermique comprenant
- un échangeur (R) configuré pour refroidir ou réchauffer une batterie (BT),
- un circuit thermique (RC) à fluide calorifique (F1), le circuit thermique (RC) connectant un chauffage électrique (EH) à l'échangeur (R), le fluide calorifique (F1) étant thermiquement couplé à un condenseur (C),
- un circuit de pompe à chaleur (HC) à réfrigérant (F2), le circuit de pompe à chaleur (HC) connectant le condenseur (C) à un évaporateur (E), et comprenant un compresseur (P) et une valve d'expansion (V),
**caractérisé en ce que** le circuit thermique (RC) comprend une dérivation (D) ayant une configuration court-circuitant le condenseur (C) pour connecter l'échangeur (R) à un radiateur (H) équipé d'un premier ventilateur (V1) ; et une configuration court-circuitant ledit radiateur (H) pour thermiquement coupler l'échangeur (R) au condenseur (C).

2. Système thermique selon la revendication 1, **caractérisé en ce qu'**il est configuré pour fonctionner en deux modes, un mode refroidissement dans lequel le circuit de pompe à chaleur (HC) est désactivé, et le condenseur (C) est court-circuité au profit du radiateur (H), et un mode réchauffement dans lequel le circuit de pompe à chaleur (HC) est activé, et le radiateur (H) est court-circuité au profit du condenseur (C).

3. Système de batterie pour batterie solide à électrode polymère, la batterie solide (BT) étant sous forme de pack-batterie qui comprend des modules de batterie (BM) et des barres omnibus (BB) connectant les modules de batterie (BM), le système de batterie comprenant :
- un système thermique selon l'une quelconque des revendications 1 à 2,
- une enveloppe formant boîtier (B) du pack-batterie et de l'échangeur (R), l'échangeur (R) étant en regard des modules de batterie (BM),
**caractérisé en ce que** l'enveloppe formant boîtier (B) comprend au moins un matériau isolant (M).

4. Système de batterie selon la revendication 3, **caractérisé en ce que** ledit matériau isolant (M) comprend un matériau polymère à changement de phase.

5. Système de batterie selon la revendication 4, **caractérisé en ce que** ledit matériau polymère à changement de phase est disposé sur une section supérieure et une section inférieure du boîtier (B).

6. Système de batterie selon l'une quelconque des revendications 3 à 5, **caractérisé en ce qu'**il comprend en outre au moins un deuxième ventilateur (V2, V3) créant un flux de refroidissement des barres omnibus (BB).

7. Système de batterie selon l'une quelconque des revendications 3 à 6, **caractérisé en ce qu'**il comprend un agencement de modules de batterie (BM) alignés disposés entre l'échangeur (R) d'un côté, et les barres omnibus (BB) de l'autre côté dans une direction d'empilage, au moins un deuxième ventilateur (V2) étant disposé dans la direction d'empilage en regard des barres omnibus (BB) du côté opposé à l'échangeur (R).

8. Système de batterie selon l'une quelconque des revendications 3 à 7, **caractérisé en ce qu'**il comprend un ou ledit agencement de modules de batterie (BM) alignés disposés entre l'échangeur (R) d'un côté, et les barres omnibus (BB) de l'autre côté dans une ou ladite direction d'empilage, au moins un deuxième ou troisième ventilateur (V3) étant disposé dans une direction perpendiculaire à la direction d'empilage en regard des barres omnibus (BB).

9. Véhicule automobile comprenant un système thermique selon l'une quelconque des revendications 1 à 2, dans lequel le radiateur (H) et l'évaporateur (E) sont disposés en arrière d'un radiateur principal du moteur du véhicule.

10. Procédé de gestion thermique de batterie solide à électrolyte polymère, au moyen d'un système thermique comprenant :
- un échangeur (R) configuré pour refroidir ou réchauffer une batterie (BT),
- un circuit thermique (RC) de batterie à fluide calorifique (F1), le circuit thermique (RC) connectant un chauffage électrique (EH) à l'échangeur (R), le fluide calorifique (F1) étant thermiquement couplé à un condenseur (C),
- un circuit de pompe à chaleur (HC) à réfrigérant (F2), le circuit de pompe à chaleur (HC) connectant le condenseur à un évaporateur (E), et comprenant un compresseur (P) et une valve d'expansion (V),
- une dérivation (D) ayant une configuration court-circuitant le condenseur (C) pour connecter l'échangeur (R) à un radiateur (H) équipé d'un premier ventilateur (V1) ; et une configuration court-circuitant ledit radiateur (H) pour thermiquement coupler l'échangeur (R) au condenseur (C),
le procédé comprenant au moins une des étapes suivantes :
- mettre en œuvre un mode refroidissement dans lequel le circuit de pompe à chaleur (HC) est désactivé, et le condenseur (C) est court-circuité au profit du radiateur (H) ; et/ou
- mettre en œuvre un mode réchauffement dans lequel le circuit de pompe à chaleur (HC) est activé, et le radiateur (H) est court-circuité au profit du condenseur (C).

## Patentansprüche

1. Thermisches System für eine Batterie mit festem Polymerelektrolyt, wobei das thermische System Folgendes umfasst:
- einen Wärmetauscher (R), der zum Kühlen oder Heizen einer Batterie (BT) konfiguriert ist,
- einen Wärmekreislauf (RC) mit Wärmeflüssigkeit (F1), wobei der Wärmekreislauf (RC) eine elektrische Heizung (EH) mit dem Wärmetauscher (R) verbindet, wobei die Wärmeflüssigkeit (F1) thermisch mit einem Kondensator (C) gekoppelt ist,
- einen Wärmepumpenkreislauf (HC) mit Kühlmittel (F2), wobei der Wärmepumpenkreislauf (HC) den Kondensator (C) mit einem Verdampfer (E) verbindet und einen Kompressor (P) und ein Expansionsventil (V) umfasst,
**dadurch gekennzeichnet, dass** der Wärmekreislauf (RC) einen Bypass (D) umfasst, der so konfiguriert ist, dass er den Kondensator (C) kurzschließt, um den Wärmetauscher (R) mit einem Kühler (H) zu verbinden ausgestattet mit einem ersten Ventilator (V1); und einer Konfiguration, die den Kühler (H) kurzschließt, um den Wärmetauscher (R) thermisch mit dem Kondensator (C) zu koppeln.

2. Thermisches System nach Anspruch 1, **dadurch gekennzeichnet, dass** es für den Betrieb in zwei Modi konfiguriert ist, einem Kühlmodus, in dem der Wärmepumpenkreislauf (HC) deaktiviert ist und der Kondensator (C) zugunsten des Kühlers (H) umgangen wird, und einem Heizmodus, in dem der Wärmepumpenkreislauf (HC) aktiviert ist und der Kühler (H) zugunsten des Kondensators (C) umgangen wird.

3. Batteriesystem für eine Feststoffbatterie mit Polymerelektroden, wobei die Feststoffbatterie (BT) die Form eines Batteriepakets hat, das Batteriemodule (BM) und die Batteriemodule (BM) verbindende Stromschienen (BB) umfasst, wobei das Batteriesystem umfasst:
- ein Wärmesystem nach einem der Ansprüche 1 bis 2,
- ein Gehäuse, das ein Gehäuse (B) des Batteriepakets und den Wärmetauscher (R) bildet, wobei der Wärmetauscher (R) den Batteriemodulen (BM) gegenüberliegt, **dadurch gekennzeichnet, dass** das ein Gehäuse (B) bildende Gehäuse mindestens ein Isoliermaterial (M) umfasst.

4. Batteriesystem nach Anspruch 3, **dadurch gekennzeichnet, dass** das Isoliermaterial (M) ein Phasenwechselpolymermaterial umfasst.

5. Batteriesystem nach Anspruch 4, **dadurch gekennzeichnet, dass** das Phasenwechselpolymermaterial an einem oberen und einem unteren Abschnitt des Gehäuses (B) angeordnet ist.

6. Batteriesystem nach einem der Ansprüche 3 bis 5, **dadurch gekennzeichnet, dass** es außerdem mindestens einen zweiten Lüfter (V2, V3) umfasst, der einen Kühlstrom der Sammelschienen (BB) erzeugt.

7. Batteriesystem nach einem der Ansprüche 3 bis 6, **dadurch gekennzeichnet, dass** es eine Anordnung ausgerichteter Batteriemodule (BM) umfasst, die in Stapelrichtung zwischen dem Tauscher (R) auf der einen Seite und den Sammelschienen (BB) auf der anderen Seite angeordnet sind, wobei in Stapelrichtung gegenüber den Sammelschienen (BB) auf der dem Tauscher (R) gegenüberliegenden Seite mindestens ein zweiter Lüfter (V2) angeordnet ist.

8. Batteriesystem nach einem der Ansprüche 3 bis 7, **dadurch gekennzeichnet, dass** es eine oder mehrere Anordnungen ausgerichteter Batteriemodule (BM) umfasst, die zwischen dem Tauscher (R) auf der einen Seite und den Sammelschienen (BB) auf der anderen Seite in einer oder mehreren Stapelrichtungen angeordnet sind, wobei mindestens ein zweiter oder dritter Lüfter (V3) in einer Richtung senkrecht zur Stapelrichtung gegenüber den Sammelschienen (BB) angeordnet ist.

9. Kraftfahrzeug mit einem Wärmesystem nach einem der Ansprüche 1 bis 2, bei dem der Kühler (H) und der Verdampfer (E) hinter einem Hauptkühler des Fahrzeugmotors angeordnet sind.

10. Verfahren zum Wärmemanagement einer Festpolymerelektrolytbatterie mittels eines Wärmesystems, das Folgendes umfasst:
- einen Wärmetauscher (R), der zum Kühlen oder Heizen einer Batterie (BT) konfiguriert ist,
- einen Wärmekreislauf (RC) einer Batterie mit Wärmeflüssigkeit (F1), wobei der Wärmekreislauf (RC) eine elektrische Heizung (EH) mit dem Wärmetauscher (R) verbindet und die Wärmeflüssigkeit (F1) thermisch mit einem Kondensator (C) gekoppelt ist,
- einen Wärmepumpenkreislauf (HC) mit Kühlmittel (F2), wobei der Wärmepumpenkreislauf (HC) den Kondensator mit einem Verdampfer (E) verbindet und einen Kompressor (P) und ein Expansionsventil (V) umfasst,
- einen Bypass (D), der so konfiguriert ist, dass er den Kondensator (C) kurzschließt, um den Wärmetauscher (R) mit einem Kühler (H) zu verbinden, der mit einem ersten Lüfter (V1) ausgestattet ist; und eine Konfiguration, die den Kühler (H) kurzschließt, um den Wärmetauscher (R) thermisch mit dem Kondensator (C) zu koppeln, wobei das Verfahren mindestens einen der folgenden Schritte umfasst :
- Implementieren eines Kühlmodus, in dem der Wärmepumpenkreislauf (HC) deaktiviert und der Kondensator (C) zugunsten des Kühlers (H) kurzgeschlossen wird; und/oder
- Implementieren eines Heizmodus, in dem der Wärmepumpenkreislauf (HC) aktiviert und der Kühler (H) zugunsten des Kondensators (C) kurzgeschlossen wird.

## Claims

1. Thermal system for a solid polymer electrolyte battery, the thermal system comprising
- an exchanger (R) configured to cool or heat a battery (BT),
- a thermal circuit (RC) with heat fluid (F1), the thermal circuit (RC) connecting an electric heater (EH) to the exchanger (R), the heat fluid (F1) being thermally coupled to a condenser (C),
- a heat pump circuit (HC) with refrigerant (F2), the heat pump circuit (HC) connecting the condenser (C) to an evaporator (E), and comprising a compressor (P) and an expansion valve (V),
**characterized in that** the thermal circuit (RC) comprises a bypass (D) having a configuration short-circuiting the condenser (C) to connect the exchanger (R) to a radiator (H) equipped with a first fan (V1); and a configuration short-circuiting said radiator (H) to thermally couple the exchanger (R) to the condenser (C).

2. Thermal system according to claim 1, **characterized in that** it is configured to operate in two modes, a cooling mode in which the heat pump circuit (HC) is deactivated, and the condenser (C) is bypassed in favor of the radiator (H), and a heating mode in which the heat pump circuit (HC) is activated, and the radiator (H) is bypassed in favor of the condenser (C).

3. Battery system for a solid polymer electrode battery, the solid battery (BT) being in the form of a battery pack which comprises battery modules (BM) and bus bars (BB) connecting the battery modules (BM), the battery system comprising:
- a thermal system according to any one of claims 1 to 2,
- a casing forming a housing (B) of the battery pack and the exchanger (R), the exchanger (R) being opposite the battery modules (BM),
**characterized in that** the casing forming a housing (B) comprises at least one insulating material (M).

4. Battery system according to claim 3, **characterized in that** said insulating material (M) comprises a phase change polymer material.

5. Battery system according to claim 4, **characterized in that** said phase change polymer material is arranged on an upper section and a lower section of the housing (B).

6. Battery system according to any one of claims 3 to 5, **characterized in that** it further comprises at least one second fan (V2, V3) creating a cooling flow of the bus bars (BB).

7. Battery system according to any one of claims 3 to 6, **characterized in that** it comprises an arrangement of aligned battery modules (BM) arranged between the exchanger (R) on one side, and the bus bars (BB) on the other side in a stacking direction, at least one second fan (V2) being arranged in the stacking direction opposite the bus bars (BB) on the side opposite the exchanger (R).

8. Battery system according to any one of claims 3 to 7, **characterized in that** it comprises one or said arrangement of aligned battery modules (BM) arranged between the exchanger (R) on one side, and the bus bars (BB) on the other side in one or said stacking direction, at least one second or third fan (V3) being arranged in a direction perpendicular to the stacking direction opposite the bus bars (BB).

9. Motor vehicle comprising a thermal system according to any one of claims 1 to 2, in which the radiator (H) and the evaporator (E) are arranged behind a main radiator of the vehicle engine.

10. Method for thermal management of a solid polymer electrolyte battery, by means of a thermal system comprising:
- an exchanger (R) configured to cool or heat a battery (BT),
- a thermal circuit (RC) of a battery with heat fluid (F1), the thermal circuit (RC) connecting an electric heater (EH) to the exchanger (R), the heat fluid (F1) being thermally coupled to a condenser (C),
- a heat pump circuit (HC) with refrigerant (F2), the heat pump circuit (HC) connecting the condenser to an evaporator (E), and comprising a compressor (P) and an expansion valve (V),
- a bypass (D) having a configuration short-circuiting the condenser (C) to connect the exchanger (R) to a radiator (H) equipped with a first fan (V1); and a configuration short-circuiting said radiator (H) to thermally couple the exchanger (R) to the condenser (C),
the method comprising at least one of the following steps :
- implementing a cooling mode in which the heat pump circuit (HC) is deactivated, and the condenser (C) is short-circuited in favor of the radiator (H); and/or
- implementing a heating mode in which the heat pump circuit (HC) is activated, and the radiator (H) is short-circuited in favor of the condenser (C).
